(19)

Europäisches
Patentamt
European
Patent Office
Office européen
des brevets

(11) **EP 3 382 331 A1**

(12) **EUROPEAN PATENT APPLICATION**

(43) Date of publication:
03.10.2018 Bulletin 2018/40

(51) Int Cl.:
*G01B 9/02* (2006.01)　　　*G01B 11/16* (2006.01)
*G01L 1/24* (2006.01)

(21) Application number: 17163877.8

(22) Date of filing: 30.03.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Technische Universität München
80333 München (DE)**

(72) Inventor: **Wang, Shengjia
85622 Feldkirchen (DE)**

(74) Representative: **Kretschmann, Dennis
Boehmert & Boehmert
Anwaltspartnerschaft mbB
Pettenkoferstrasse 22
80336 München (DE)**

(54) **A METHOD AND DEVICE FOR OBTAINING A PHASE SHIFTED SHEAROGRAM FOR SHEAROGRAPHY**

(57)　　A method for obtaining a phase shifted shearogram of a target for shearography comprising the steps of irradiating the target with a polarized coherent light beam from a polarized coherent light source, wherein a phase of at least one polarization component of the polarized coherent light beam is electrically modulated; passing a reflected beam, which is reflected from the target, through a polarization dependent optical retarder; splitting propagation directions of a first polarization component and a second polarization component of the reflected beam from a plurality of point sources of the target, the first polarization component being different from the second polarization component; and interfering the first polarization component from a first point source among the plurality of point sources and the second polarization component from a second point source among the plurality of point sources in an image plane, the first point source being different from the second point source.

Fig. 1

EP 3 382 331 A1

**Description**

**Field of the invention**

The present invention relates to shearography techniques for non-destructive testing, and more particularly to speckle shear interferometry.

**Background**

Shearography techniques may be used as an inspection tool for auto/aerospace industry, manufacturing, and quality control to detect flaws, defects, strain, stress, vibration and deformation. Herein, the phase picked up by light beams reflected from a target surface is recovered by interference.

Generally, the system type of shearography falls into two categories: the Michelson interferometer type and the common path interferometer type. Compared to the Michelson interferometer type, the common path interferometer type improves the light efficiency and has a simpler optical setup, which further enhances the system robustness. Furthermore, there is no reference beam in a shearography system, so no special vibration isolation is required, which made shearography gain wide industrial acceptance.

To figure out the phase map related to the specimen, phase shifting techniques are required in the shearography. However, it is more difficult to introduce a varying phase shift in the common path interferometer structure system, because the interfering beams often propagate along essentially the same optical path. Furthermore, present systems are often strongly dependent on wavelength or suffer from distortion due to phase discretization, temperature stability or mechanical irregularities in the setup. The present invention overcomes these problems.

The scientific publication "Vibration analysis by modulated time-average speckle shearing interferometry" by J. D. R. Valera and J. D. C. Jones, published in Meas. Sci. Technol. Vol. 6, 965-970 (1995), discloses a way to electrically modulate a phase of a linear polarization component of a coherent light beam by straining a fiber. The modulated beam then irradiates a target and a reflected beam is passed through a Wollaston prism and a polarizer to create an interference pattern of vibration modes on a CCD camera screen.

The scientific publication "Continual mechanical vibration trajectory tracking based on the electro-optical heterodyne interferometry" by Wang et al., published in Opt. Express Vol. 22, 7799-7810 (2014), discloses modulating a phase of the polarization components by applying voltages to sides of a lithium niobate crystal. A Michelson interferometer is then used to monitor a vibration of a target in real-time.

**Overview of the invention**

The invention relates to a method for obtaining a phase shifted shearogram of a target for shearography according to independent claim 1, a shearography device to obtain a phase shifted shearogram of a target according to independent claim 9 and a computer program implementing a shearography technique according to independent claim 14. The dependent claims relate to preferred embodiments.

In a first aspect, the invention relates to a method for obtaining a phase shifted shearogram of a target for shearography comprising the steps of: irradiating the target with a polarized coherent light beam from a polarized coherent light source, wherein a phase of at least one polarization component of the polarized coherent light beam is electrically modulated; passing a reflected beam, which is reflected from the target, through a polarization dependent optical retarder; splitting propagation directions of a first polarization component and a second polarization component of the reflected beam from a plurality of point sources of the target, the first polarization component being different from the second polarization component; and interfering the first polarization component from a first point source among the plurality of point sources and the second polarization component from a second point source among the plurality of point sources in an image plane, the first point source being different from the second point source.

The method according to the invention thereby implements a common path shearography system. By irradiating the target with the polarized coherent light beam and recovering the reflected beam, information on the phase distribution or spatial elevation in each point of the target may be encoded into the phase of the reflected beam. By irradiating the target with the polarized coherent light beam, wherein a phase of at least one polarization component of the polarized coherent light source is electrically modulated, each point of the target may act as a source of different reflected beams with differing phase, wherein the different reflected beams may be differentiated by their polarization. As a phase of at least one polarization component of the polarized coherent light source is electrically modulated, the phase difference between points may be modulated in addition to the phase distribution or spatial elevation in each point. In other words, each point of the target may be considered as a point source emitting a polarized coherent light beam, whose phase depends on the phase distribution of the target or on the spatial elevation of the point with respect to the propagation direction of the polarized coherent light beam from the polarized coherent light source and whose phase may also depend on a modulation of the phase of at least one polarization component of the polarized coherent light beam, which is electrically modulated.

Depending on the nature of the target, the polarized coherent light beam may be reflected, diffracted, scattered, partly absorbed or similarly interact with the target, wherein combinations of said processes may be comprised. For the sake of clarity and convenience, the interaction will in the following be described as a reflection even though all such interactions of a light beam with a target may generally occur in embodiments and aspects of the invention. Said interaction with the target may lead to the light beam acquiring a spatially or temporally dependent phase that may be analogous or similar to the specific case of a reflection discussed in detail. For the sake of convenience and clarity, the light beam is termed the reflected beam after the interaction with the target without intending to reduce the scope of the invention to a mere reflection of the light beam.

In the shearography system, polarized coherent light beams with different polarizations may act as reference beams to each other and in the common path configuration, polarized coherent light beams with different polarizations may propagate along essentially the same optical path. These hold the advantage that the method to obtain a phase shifted shearogram may become less sensitive to vibrations of the target with respect to the physical components used to implement the method, such as the image plane or the polarized coherent light source. Furthermore, reflected beams originating from different points of the target may be selected by their polarization.

Preferably, the source of the polarized coherent light beam should feature a coherence of the coherent light beam that is greater than the investigated spatial dimensions of the target. In embodiments, a polarized coherent light source may be implemented by any coherent light source, such as a laser which emits polarized light or whose output beam may be polarized by using a polarizer.

A polarization component may relate to a portion of the electric field of the polarized coherent light beam in transverse direction with respect to a propagation direction, such as an X- or a Y-component, or may relate to a portion of the electric field with a certain opposite handedness, chirality or helicity, such as left- and right-circularly polarized components or more generally left- and right- oriented elliptical polarization components. Generally, the polarization of the polarized coherent light beam may be linear, left-circular, right-circular or elliptical and may be dependent on time.

Passing a reflected beam through a polarization dependent optical retarder may allow to select, and/or prepare, and/or convert the polarization of the reflected beam for the step of splitting propagation directions of the first polarization component and the second polarization component of the reflected beam. Generally, a polarization dependent optical retarder may generate a phase shift between the phases of two polarization components of a polarized coherent light beam, in particular a fixed phase shift.

Selecting specific polarizations of the reflected beam may reduce an effect of randomization of linear polarization components upon reflection at the target. The polarization dependent optical retarder may hereby increase a signal to noise ratio in the step of interfering the first polarization component from the first point source among a plurality of point sources and second polarization component from a second point source among the plurality of point sources in an image plane. Such a randomization may be due to a structural roughness of the target surface spatial dimensions corresponding to the wavelength of the polarized coherent light beam. Similarly, a polarization may be prepared to choose an alignment of the polarization with respect to the splitting direction from the step of splitting propagation directions of the first polarization component and the second polarization component. The polarization dependent optical retarder may otherwise be used to rotate the polarization of the reflected beam.

By irradiating the target with a polarized coherent light beam from a polarized coherent light source, wherein the phase of at least one polarization component of the polarized coherent light beam is electrically modulated, a phase difference between polarization components of a polarized coherent light beam may be introduced electrically. This may allow to create the phase difference without any moving parts and therefore may allow reducing an effect of distortion or vibration within the method (as could be introduced by mechanically moving parts). Additionally, this may allow manipulating the phase of a polarization component of the polarized coherent light beam at an arbitrary speed. Specifically, the speed may be adjusted to allow real-time shearography of the target. The phase difference which is electrically modulated may furthermore allow controlling the phase difference with an electrical control signal (i.e. from a computer) which may be used to synchronize the phase difference with further apparatus.

In a preferred embodiment, the method further comprises: modulating electrically the phase of the at least one polarization component of the polarized coherent light beam.

In another preferred embodiment, the method further comprises: modulating electrically the phase of the at least one polarization component of the polarized coherent light beam in a birefringent medium by varying an applied electrical field and/or an applied magnetic field and/or an applied mechanical strain. In other words, a change of refractive index of a birefringent medium corresponding to a certain polarization component by varying an applied electrical field and/or an applied magnetic field and/or an applied mechanical strain may modulate a phase of said polarization component comprised in the polarized coherent light beam.

In a preferred embodiment, the phase of the at least one polarization component of the polarized coherent light beam is modulated by means of a Pockels-cell and/or a Kerr-cell. Herein, a crystal exhibiting the Kerr-effect or the Pockels-effect and therefore an electric modulation of the refractive index along at least one crystal direction may be used to modulate the phase of at least one polarization component of a polarized coherent light beam.

In some embodiments, the phase of at least one polarization component of the polarized coherent light beam is electrically modulated by means of at least one electrode or at least one pair of electrodes connected to the birefringent medium. In embodiments, the at least one electrode or pair of electrodes may be connected to a voltage source.

In some embodiments, the at least one electrode or the at least one pair of electrodes are positioned on at least one side or at least one pair of opposing sides of the birefringent medium, and the electrodes may substantially cover the at least one side or the at least one pair of opposing sides of the birefringent medium.

Modulating the phase of at least one polarization component of the polarized coherent light beam by using the Kerr-effect and/or the Pockels-effect in a crystal or different suitable medium may have the advantage of offering almost instantaneous manipulation of the refractive index along selected orientations of the crystal by applying a fast changing voltage across the crystal. Similarly, a static phase shift may also be implemented by applying a static voltage across the crystal. Additionally, this manipulation method using a Pockels-cell or a Kerr-cell may not be very sensitive to temperature changes and may be implemented without moving mechanical parts that could lead to distortion. Furthermore, this manipulation method may be used over a large range of wavelengths even without changing the cell and may allow probing a target with different wavelengths, wherein the target may be simultaneously probed with different wavelengths. In addition, this manipulation method may suffer no negative effects from a discretization of the manipulation along the transverse direction.

In another preferred embodiment, two phases of two different polarization components of the polarized coherent light beam are electrically modulated. In one embodiment, the two different polarization components are aligned to be substantially perpendicular or may comprise opposite handedness, chirality or helicity, such as left- and right-circularly polarized components or more generally left- and right- oriented elliptical polarization components.

In embodiments, the birefringent medium may comprise two pairs of electrodes, wherein each of the two pairs of electrodes are connected to a voltage source. In some embodiments, the voltage sources may be different outputs of the same (parent) voltage source that may output the same signal which may have different phases at the outputs. In some embodiments, the pairs of electrodes are aligned along the birefringent medium substantially perpendicular to each other such that the electric fields generated by the respective pairs of electrodes are substantially perpendicular to each other.

In some embodiments, the phases of the two different polarization components may be modulated by means of a crystal exhibiting the Kerr-effect or the Pockels-effect. In embodiments, the crystal may comprise two pairs of electrodes positioned on the surface of the crystal, wherein each of the two pairs of electrodes are connected to a voltage source.

In another preferred embodiment, a modulation of the phase of the at least one polarization component comprises a sinusoidal modulation and may have a selected frequency. In the present disclosure, for the sake of convenience, the terms frequency and angular velocity may be used synonymously, even though their conventional technical definitions may imply a factor of $2\pi$ between the terms. Therefore in all instances, the term frequency may be exchanged with the term angular velocity.

In some embodiments, the sinusoidal modulation has an amplitude which corresponds to or results in a half wave retardation/advance of the polarized coherent light beam. The phase of the polarization component along (or corresponding to) the axis of modulation may therefore be retarded or sped up by half a wavelength ($\pm$ 10%) with respect to the case of no modulation. In other words, the polarization component along the axis of modulation may be phase shifted by a phase shift of $\pi \pm$ 10% at the full amplitude of the modulation signal with respect to the case of no modulation.

In some embodiments, the phase of two polarization components of the polarized coherent light beam are each electrically modulated, wherein the modulation comprises a sinusoidal modulation. In a preferred embodiment, the phase of two polarization components of the polarized coherent light beam are each electrically modulated wherein the modulation may comprise a sinusoidal modulation and there may be a phase shift between the sinusoidal modulation signals of the two polarization components of $\pi/2 \pm$ 10%.

In some embodiments, the sinusoidal modulation of the phase of the at least one polarization component of the polarized coherent light beam may be used to implement a heterodyne detection scheme. Herein, a signal to noise ratio may be increased by mixing a modulation signal with a signal from a modulated interference pattern and thereby isolating the modulated interference pattern from a background signal.

In another embodiment, the sinusoidal modulation of the phase of the at least one polarization component of the polarized coherent light beam may be used to investigate a vibration of the target, wherein the frequency of the electrical modulation may be greater than half of the frequency of vibration.

In a preferred embodiment, the polarized coherent light beam irradiating the target comprises two differently polarized components with different frequencies. In some embodiments, the polarized coherent light beam irradiating the target being composed of two differently polarized components with different frequencies is due to the step of electrically modulating a phase of at least one polarization component of a polarized coherent light beam. In some embodiments, the different frequencies of the two differently polarized components may modulate the phase shifted shearogram. In other words, the different frequencies of differently polarized components may result in a modulation of a phase difference between interfering beams at the image plane.

In some embodiments, the polarization of the two components of the polarized coherent light beam from the polarized coherent light source comprises a left- and right-circularly polarized component, respectively. In some embodiments, the polarization of the two components of the polarized coherent light beam from the polarized coherent light source comprising a left- and right-circularly polarized component respectively is due to the step of electrically modulating a phase of at least one polarization component of a polarized coherent light beam.

In a preferred embodiment, the polarized coherent light beam irradiating the target comprises a left-circularly polarized component and a right-circularly polarized component with different frequencies, respectively.

Irradiating a target with a circularly polarized coherent light beam may reduce an effect of a randomization of the linear polarization components of the reflected beam. Such a randomization of linear polarization components may be due to a roughness of the target at the scale of the wavelength of the polarized coherent light beam.

In another preferred embodiment, a frequency difference of the two differently polarized components is a function of a modulation frequency applied to the at least one electrode or to the at least one pair of electrodes connected to the birefringent medium.

In yet another preferred embodiment, a frequency difference of the two differently polarized components is a function of a modulation frequency applied to two pairs of electrodes connected to the birefringent medium, in particular proportional to the modulation frequency applied to the two pairs of electrodes, particularly twice the modulation frequency applied to the two pairs of electrodes.

In some embodiments, electrically modulating the phase rotates the polarization of the polarized coherent light beam.

In a preferred embodiment, the polarization dependent optical retarder implements the function of a quarter wave plate to convert a linear polarization component to a circular polarization component and vice versa. In a preferred embodiment, the polarization dependent optical retarder comprises a quarter wave plate.

To select reflected beams originating from different points of the target by their polarization, the method may comprise the step of splitting propagation directions of the first polarization component and the second polarization component of the reflected beam from a plurality of point sources of the target. The first polarization component and the second polarization component may refer to two selected polarization directions, such as a vertical component and a horizontal component or a left-circular and right-circular component of a polarized coherent light beam. By changing the propagation directions of the first polarization component and/or the second polarization component, light beams from different point sources and with different polarizations with respect to the first polarization component and the second polarization component may be made to intersect in the image plane.

In a preferred embodiment, the splitting of the propagation directions of the first polarization component and the second polarization component is by means of a birefringent prism. The birefringent prism may comprise a birefringent crystal. In the birefringent crystal, the propagation speed of an ordinary polarization component and an extraordinary polarization component of a light beam may be different. At an interface between crystals or between the crystal and another material, the propagation direction or reflection condition of different polarization components of a polarized light beam may therefore change. This effect may be used to split propagation directions of the first polarization component and the second polarization component of the light beam.

In some embodiments, the birefringent prism may comprise two crystal parts exhibiting birefringence. In a particular embodiment, the two crystal parts of the birefringent prism have differently oriented ordinary and extraordinary axes. In another embodiment, the different reflection conditions for the ordinary component and the extraordinary component of the polarized coherent light beam at an interface are used to split the propagation directions of an ordinary component and an extraordinary component of the reflected beam.

In a preferred embodiment, the birefringent prism comprises a Glan-style prism in particular a Wollaston prism, and/or a Rochon prism, and/or a Sénarmont prism, and/or a Nomarski prism.

The step of splitting the propagation directions of the first polarization component and the second polarization component of the reflected beam from a plurality of point sources of the target may allow interfering the first polarization component from a first point source among the plurality of point sources and the second polarization component from a second point source among the plurality of point sources in an image plane. Conversely, the position of the image plane may define the reflected beams, which interfere in the image plane and which originate from a specific plurality of point sources with a suitable real space distance between said point sources, such as the first point source and the second point source. In other words, the position of the image plane may define the suitable real space distance between said points and vice versa. Interfering two reflected beams may result in an interference pattern whose intensity depends on the relative phase between said reflected beams. In other words, a differing phase of the reflected beams may result in a specific light intensity at the position of the image plane where the reflected beams interfere, wherein the light intensity may depend on the relative phase of the reflected beams.

The interference pattern in the image plane may hold information about the phase distribution of the target and therefore may hold information about the relative spatial elevation of different selected points (such as the first point source and the second point source) from the plurality of point sources of the target with respect to the propagation direction of the polarized coherent light beam from the polarized coherent light source. The different selected points may be selected from points whose reflected beams with different polarization components intersect in the image plane.

In a preferred embodiment, the ordinary component and the extraordinary component of the reflected beams from different point sources may be made to interfere in the image plane by means of a polarizer.

In a preferred embodiment, the method further comprises the steps of projecting the image plane onto a camera; and preferably further comprising the step of synchronizing an image acquisition rate of the camera with a phase modulation of the polarized coherent light source. The image plane may be projected onto a camera using a lens or a plurality of lenses or similar optical apparatus known to a skilled person. Otherwise, the camera may also be positioned to directly capture the image plane. In a particular embodiment, the depth of field in the step of projecting said image plane onto a camera may be adjustable. In another embodiment, the image plane is selected by changing the focus distance of the optical apparatus implementing the step of projecting said image plane onto a camera. In other words, the real space distance between different points of the target acting as point sources for reflected beams that intersect in the image plane and may give rise to an interference pattern may be adjusted by changing the focus distance of the optical apparatus implementing the step of projecting said image plane onto a camera.

The image acquisition rate of the camera may be fixed to take an arbitrary number of images in a specified time frame with fixed time intervals between successive images. The camera may also take an image at a specified time which may be triggered by a signal sent through a synchronizing link such as an optical link, a wireless link or an electrical link, which may comprise a cable, wherein the specified time of the signal may be related to the phase modulation of the at least one polarization component of the polarized coherent light source or the polarized coherent light beam. In other words, a synchronizing device may synchronize an image acquisition rate of the camera and the phase modulation of the polarized coherent light beam. Otherwise, the camera may also send a signal through the synchronizing link at a specified time related to the time of taking an image to trigger the phase modulation of the at least one polarization component of the polarized coherent light source or the polarized coherent light beam.

In a preferred embodiment, the method further comprises the step of obtaining a phase-shifted shearogram from the interfered first and second polarization components.

A phase-shifted shearogram or shearogram for short, in the sense of the present disclosure, may be understood to denote a representation of the interfered first and second polarization components from the respective point sources. Said shearogram may be a graphical representation, a data set, or may be in any other suitable format for output, further analysis or further processing.

Said shearogram may be a useful intermediate result towards obtaining a phase map of the target, said phase map comprising spatially resolved phase information about the target.

In a preferred embodiment, the method further comprises the step of obtaining a phase map from said shearogram, and preferably from a plurality of shearograms.

In some embodiments, the method comprises a step of obtaining the phase map from at least three different phases of at least three different shearograms. The at least three phases of the at least three shearograms may each be defined at the same spatial point of the image plane.

In some embodiments, a phase map may be extracted from the spatial intensity distribution of the at least three shearograms with different phases by using a phase shifting algorithm. A phase shifting algorithm may be an algorithm that comprises steps for extracting the phase distribution of the target from the plurality of shearograms with different phases.

In another aspect, the invention relates to a system for obtaining a phase shifted shearogram of a target for shearography comprising: an irradiation device adapted to irradiate the target with a polarized coherent light beam from a polarized coherent light source, wherein a phase of at least one polarization component of the polarized coherent light beam is electrically modulated; a polarization dependent optical retarder in the path of a reflected beam which is reflected from the target; a splitting device adapted to split propagation directions of a first polarization component and a second polarization component of the reflected beam from a plurality of point sources of the target, the first polarization component being different from the second polarization component; and a polarizer adapted to allow interference between the first polarization component from a first point source among the plurality of point sources and the second polarization component from a second point source among the plurality of point sources in an image plane, the first point source being different from the second point source.

In a preferred embodiment, the irradiation device comprises an electrically controlled phase shifter adapted to modulate the phase of the at least one polarization component of the polarized coherent light beam.

In another preferred embodiment, the electrically controlled phase shifter comprises a birefringent medium, whose birefringence depends on an applied electrical field, and/or an applied magnetic field, and/or an applied mechanical strain.

In some embodiments, the birefringent medium comprises at least one electrode or at least one pair of electrodes connected to the birefringent medium and adapted to electrically modulate the phase of at least one polarization component of the polarized coherent light beam. In embodiments, the at least one electrode or the at least one pair of electrodes are positioned on at least one side or at least one pair of opposing sides of the birefringent medium and the electrodes may substantially cover the at least one side or the at least one pair of opposing sides of the birefringent medium.

In yet another preferred embodiment, the electrically controlled phase shifter comprises a Pockels-cell and/or a Kerr-cell.

In embodiments, an electrode, a pair of electrodes or a plurality of pairs of electrodes may be connected to the Pockels-cell or the Kerr-cell to modulate the birefringence of the birefringent medium or an effective refractive index of the birefringent medium for a polarization component.

In another preferred embodiment, the polarization dependent optical retarder implements the function of a quarter wave plate to convert a linear polarization component to a circular polarization component and vice versa. In another preferred embodiment, the polarization dependent optical retarder comprises a quarter wave plate.

In yet another embodiment, the shearography device to obtain a phase shifted shearogram of a target comprises: an electrically controlled phase shifter for modulating a phase of two polarization components of a polarized coherent light beam. Preferably, the two polarization components may be oriented substantially perpendicular or may comprise opposite handedness, chirality or helicity, such as left- and right-circularly polarized components or more generally left- and right- oriented elliptical polarization components.

In a further preferred embodiment, the polarized coherent light beam outgoing from the electrically controlled phase shifter is composed of two differently polarized components with different frequencies.

In another preferred embodiment, the polarized coherent light beam outgoing from the electrically controlled phase shifter is comprised of a left- and a right-circularly polarized component.

In a particular preferred embodiment, the polarized coherent light beam outgoing from the electrically controlled phase shifter is composed of a left- and a right-circularly polarized component with different frequencies, respectively.

In yet another preferred embodiment, the shearography device also comprises: a camera configured to acquire a resulting phase shifted shearogram from the image plane; and preferably further comprises a synchronizing device configured to synchronize the phase of at least one polarization component of the outgoing polarized coherent beam from the electrically controlled phase shifter with an acquisition rate of the camera.

In another preferred embodiment, the splitting device comprises a birefringent prism.

In a preferred embodiment, the splitting device comprises a Glan-style prism, in particular a Wollaston prism, and/or a Rochon prism, and/or a Sénarmont prism, and/or a Nomarski prism.

In yet another preferred embodiment, the shearography device to obtain a phase shifted shearogram of a target comprises devices for implementing any of the methods of the preferred embodiments described above or implements any of the methods of the preferred embodiments described above.

In another aspect, the invention relates to a computer program or computer program product comprising computer readable instructions for implementing a method with the steps of: irradiating a target with a polarized coherent light beam from a polarized coherent light source, wherein a phase of at least one polarization component of the polarized coherent light beam is electrically modulated, such that a reflected beam, which is reflected from the target, passes through a polarization dependent optical retarder, and such that propagation directions of a first polarization component and a second polarization component of the reflected beams from a plurality of point sources of the target are split, the first polarization component being different from the second polarization component; capturing an interference signal of the first polarization component from a first point source among the plurality of point sources and the second polarization component from a second point source among the plurality of point sources in an image plane, the first point source being different from the second point source.

In a preferred embodiment, the computer program or computer program product comprises computer readable instructions to implement any of the embodiments of the method for obtaining a phase shifted shearogram of a target for shearography described above or to control or program any of the embodiments of the system for obtaining a phase shifted shearogram of a target for shearography to obtain a phase shifted shearogram of a target.

In a preferred embodiment, the computer program or computer program product may comprise computer readable code for implementing a method with a step of generating communication signals instructing a device to electrically modulate a phase of at least one polarization component of a polarized coherent light beam or generating voltage signals or a control voltage to electrically modulate a phase of at least one polarization component of a polarized coherent light beam.

In a preferred embodiment, the computer program or computer program product may comprise computer readable code for implementing a method with a step of generating communication signals instructing a device to electrically control a birefringent medium, whose birefringence depends on an applied electrical field, and/or an applied magnetic field, and/or an applied mechanical strain; or generating voltage signals or a control voltage to electrically control a birefringent medium, whose birefringence depends on an applied electrical field, and/or an applied magnetic field, and/or an applied mechanical strain. In a particular preferred embodiment, the electrically controlled phase shifter, whose birefringence depends on an applied electrical field, comprises a Pockels-cell or a Kerr-cell.

In a preferred embodiment, the computer program or computer program product may comprise computer readable code for implementing a method with a step to control a camera configured to acquire an interference pattern in the image plane. In another preferred embodiment, the phase of at least one polarization component of the polarized coherent light beam is synchronized with an acquisition rate of the camera. In a particular embodiment, the computer program or product may comprise computer readable code for implementing a method with a step to acquire or generate trigger signals to synchronize the acquisition rate of the camera and the phase of at least one polarization component of the polarized coherent light beam.

## Detailed description of embodiments

The features and numerous advantages of the methods, device and computer programs or computer program products according to the present invention will best be understood from a detailed description of preferred embodiments with reference to the accompanying drawings, in which:

Fig. 1 illustrates a system configuration of an embodiment of the present invention illustrating the optical path of selected light beams through an optical setup to obtain and record a phase shifted shearogram of a target;

Fig. 2 illustrates an embodiment of an electrically controlled phase shifter implemented as a Pockels-cell in connection with two power supplies; and

Fig. 3 exemplifies an optical arrangement to select different points of a target by splitting the ordinary and extraordinary components of a reflected beam in a Wollaston prism and interfering an ordinary component of the reflected beam originating from one point of the target with an extraordinary component of the reflected beam originating from a different point of the target in an image plane using a polarizer.

Fig. 4 illustrates a flow diagram for a method for obtaining a phase shifted shearogram of a target for shearography.

Fig. 5 illustrates a flow diagram of steps implemented by computer readable instructions comprised in a computer program or computer program product for implementing a method for shearography.

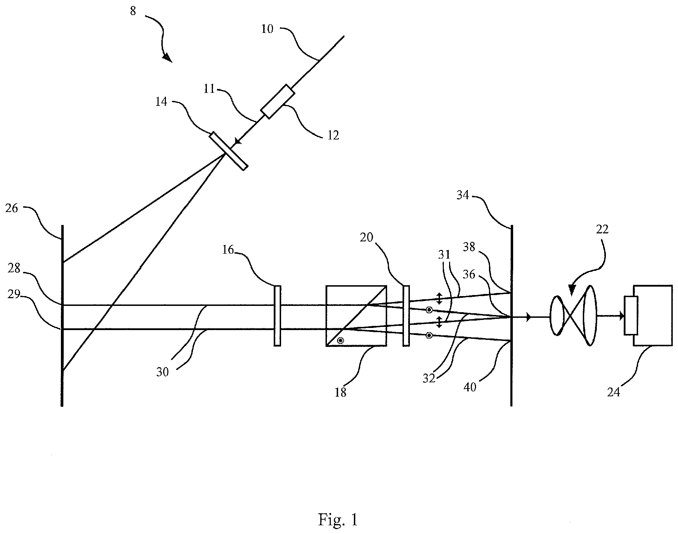

Referring to Fig. 1, an embodiment comprises an irradiation device 8 for generating a polarized coherent light beam 10, such as by means of a laser (not shown). The irradiation device 8 further comprises an electrically controlled phase shifter 12, which may be implemented as a Pockels cell and a beam expander 14 for expanding the polarized coherent light beam 10 emanating from the phase shifter 12 onto a target 26. Fig. 1 further shows in the optical path after the target 26, a polarization dependent optical retarder 16, which may be implemented as a quarter wave plate, a birefringent prism 18 which is illustrated in its function as a Wollaston prism, a polarizer 20, a lens assembly 22 depicted as a zoom camera lens, and a camera 24, which may be a CCD camera. There may be no mechanical moving part in the whole system.

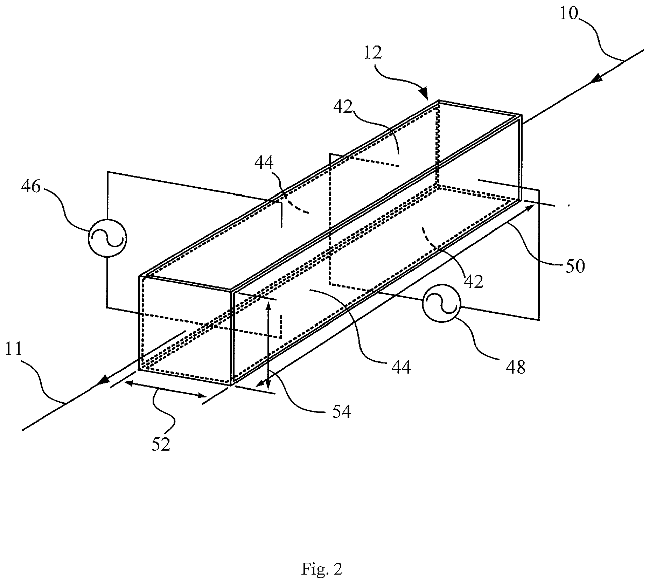

Referring to Fig. 1 and Fig. 2, the polarized coherent light beam 10 enters the electrically controlled phase shifter 12. Within the electrically controlled phase shifter 12, at least one polarization component of the polarized coherent light beam 10 experiences a phase shift that depends on an electrical modulation. Said modulation may be due to a modulation of a refractive index associated with the at least one polarization direction, as will be explained in more detail with reference to Fig. 2.

Referring again to Fig. 1, an outgoing polarized coherent light beam 11, whose phase has been electrically modulated, passes through the beam expander 14 which changes the collimation angle of the outgoing polarized coherent light beam 11 such that a surface area of a target 26 can be irradiated. The target may be a structurally important (and possibly strained) part of an assembly such as a part of a wing of an aircraft or a part of a chassis of a car or the like (and is not considered to be limiting). The outgoing polarized coherent light beam 11 may then be reflected from the target 26 at each point 28, 29 of the surface area of the target 26. After the reflection, the phase of the reflected beam 30 may carry information about the effective path length that the polarized coherent light beam 10 has traveled. The reflected beam 30 may therefore carry information about the phase distribution of the target 26. Therefore, the reflected beam 30 may carry information about an instantaneous spatial elevation profile of the target 26 after the reflection. Every point 28, 29 within the surface area of the target 26 may be considered as a point source of a reflected beam 30 which carries information about the relative spatial elevation of said point 28, 29 or the phase distribution at the position of said point 28, 29.

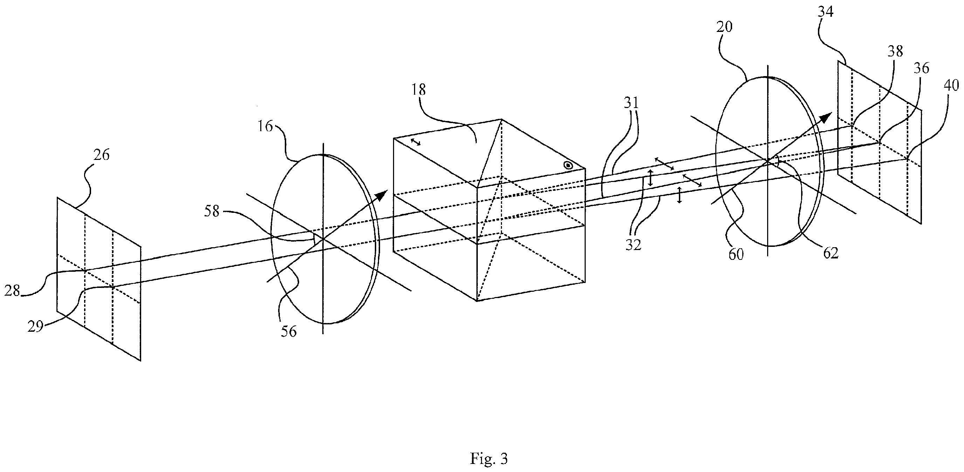

Referring to Fig. 1 and Fig. 3, the reflected beam 30 which corresponds to the outgoing polarized coherent light beam 11 after it has been reflected then passes through the polarization dependent optical retarder 16. The polarization dependent optical retarder 16 changes the phase of at least one of the polarization components of the reflected beam 30. In a preferred embodiment the polarization dependent optical retarder 16 is implemented as a quarter wave plate and therefore converts a linear polarization component to a circular polarization component and vice versa. Generally, the quarter wave plate may shift the relative phase of an ordinary and an extraordinary component with respect to the orientation of the quarter wave plate by $\pi/2$.

The reflected beams 30 originating from different points 28, 29 of the target 26 may then pass through the birefringent prism 18. In the birefringent prism at least one of the different polarization components of the reflected beam 30 may change a propagation direction. In other words, at least one of the propagation directions of an extraordinary light 31 and an ordinary light 32 may be changed upon passage through the birefringent prism 18. The ordinary light 32 and the extraordinary light 31 may correspond to specific polarization components of the reflected beam 30 oriented along respective axes of the birefringent prism 18. In a preferred embodiment, the birefringent prism is a Glan-style prism depicted as a Wollaston prism in Fig. 1. In the Wollaston prism, two birefringent crystals are connected to each other with their respective ordinary and extraordinary axes oriented differently. The reflected beam 30 originating from the specific points 28, 29 of the target 26 passing through the Wollaston prism may split into an ordinary light 32 and an extraordinary light 31 at the interface of the two birefringent crystals, wherein the ordinary light 32 and the extraordinary light 31 may each have different propagation directions.

The ordinary lights 32 and the extraordinary lights 31 pass through the polarizer 20 before irradiating an image plane 34. In the image plane 34, the ordinary light 32 originating from a first point 28 and the extraordinary light 31 originating from a second point 29 of the surface of the target 26 may intersect in a focus point 36, whereas the extraordinary light 31 of the first point 28 and the ordinary light 32 of the second point 29 may not intersect and may arrive at the image plane at different peripheral points 38, 40. The extraordinary light 31 of the first point 28 of the surface of the target 26 may arrive at the peripheral point 38 which may be displaced from the other peripheral point 40 while the ordinary light 32 originating from the second point 29 of the surface of the target 26 may arrive at the other peripheral point 40. At the focus point 36, the ordinary light 32 and the extraordinary light 31 originating from different points 28, 29 of the surface of the target 26 may interfere and may therefore create an interference signal which may depend on phase distribution of the surface of the target 26 or on the relative spatial elevation of the different points 28, 29 of the surface of the target 26. A plurality of focus points 36 may define the image plane 34 (or vice versa) and the plurality of interference signals at the plurality of focus points 36 may therefore result in an interference pattern at the image plane 34.

In the embodiment depicted in Fig. 1, the interference pattern is then projected onto the camera 24 using the lens assembly 22. It may be considered that the image plane is defined by the focal points of the lens assembly 22 and the position of the lens assembly 22 and the camera 24. By changing a focus condition depending on the parameters of the lens assembly 22, the position of the lens assembly 22 and the camera 24, the position of the image plane may be changed. By changing a position of the image plane, the real space distance of the different points 28, 29 of the surface of the target 26 that act as point sources for reflected beams 30, whose ordinary light 32 and extraordinary light 31 intersect in the image plane 34, may be changed.

In a particular embodiment, the polarized coherent light beam 10 is initially linearly polarized and may be described by a Jones-vector:

$$V_i = \begin{bmatrix} 1 \\ 0 \end{bmatrix} e^{-i\omega_0 t}, \qquad\qquad (1)$$

where $\omega_0$ is an angular velocity of the polarized coherent light beam 10 and is related to the frequency of the polarized coherent light beam 10 and $t$ denotes the time parameter. The Jones vector describes the electrical field along two transverse directions, wherein the transverse directions are perpendicular to the propagation direction of the polarized coherent light beam 10, and wherein the two transverse directions are perpendicular to each other. For convenience and clarity, the electrical field is normalized to one, while any suitable electrical field magnitude may be chosen in embodiments.

The polarized coherent light beam 10 then passes through an electrically controlled phase shifter 12, which is implemented as a Pockels-cell, comprising a lithium niobate crystal connected by pairs of electrodes 42, 44. In the electrically controlled phase shifter 12 the phase of two substantially perpendicular polarization components of the polarized coherent light beam 10 may be modulated or shifted.

Referring now to Fig. 2, the lithium niobate crystal implementing the electrically controlled phase shifter 12 may be driven by a rotating electric field generated by power supplies 46, 48. The electric field is applied along pairs of electrodes 42, 44 which are disposed substantially perpendicular to each other along the transverse direction of the lithium niobate crystal with respect to the propagation direction of the polarized coherent light beam 10 through the lithium niobate crystal.

Said lithium niobate crystal is hereby oriented along its three-fold axis with respect to the propagation direction of the polarized coherent light beam 10. Particularly, a piece of Z-cut lithium niobate crystal may be used. The crystal may be a cuboid with a square cross section. In the following, the dimensions of the crystal may be assumed to be $d \times d \times L$, while in fact any dimensions may be used. The length 50 of the crystal $L$ may hereby be defined along the propagation direction of the polarized coherent light beam 10 while the width 52 and the height 54 of the crystal may be of equal dimension $d$ and may be aligned with the pairs of electrodes. Four separated electrodes 42, 44 are attached to four rectangle surfaces (with the dimension of the electrodes being $d \times L$ and configured to substantially cover the transverse sides of the lithium niobate crystal) of the crystal respectively which are insulated from each other and form two pairs of electrodes. One pair of opposing electrodes 42 is connected to the first channel of the power supply 46 and the other such pair 44 is connected to the second channel of the power supply 48.

Upon a sinusoidal electrical modulation applied to each pair of electrodes 42, 44 generated by the power supplies 46, 48 with an angular frequency $\omega$ and with a phase shift between the modulation signals of $\pi/2$, the electric fields $E_x$, $E_y$ along an X- and a Y-direction of the crystal, wherein the X- and Y-direction are defined by the geometry of the two pairs of electrodes 42, 44 and/or the geometry of the crystal, may be represented as

$$\begin{cases} E_x = \frac{U_\pi}{d} cos\omega t \\ E_y = \frac{U_\pi}{d} sin\omega t \end{cases}, \qquad (2)$$

*wherein d* is the thickness of the crystal along the respective axis and $U_\pi$ is a half wave voltage of the crystal that may be determined by the equation

$$U_\pi = \frac{\lambda}{2n_0^3 \gamma_{22}} \frac{d}{L} \qquad (3)$$

wherein $\lambda$ is a wavelength of the polarized coherent light beam 10, $d$ is the thickness of the crystal along the respective axis, $L$ is the length of the crystal along the propagation direction of the polarized coherent light beam 10, $n_0$ is a refractive index of the crystal and $\gamma_{22}$ is the electro-optic efficient.

The half wave voltage corresponds to (or results in) a half wave retardation/advance of the phase of a polarization component of the polarized coherent light beam 10 with respect to the case of no electrical modulation. The phase of the polarization component along the axis of modulation may therefore be retarded or sped up by half a wavelength with respect to the case of no modulation. In other words, the polarization component along the axis of modulation may be phase shifted by a phase shift of $\pi$ at the full amplitude of the modulation signal with respect to the case of no modulation.

In an electrically controlled phase shifter 12, the wavelength may be limited by the transparency of the electrically controlled phase shifter 12 and therefore for the case of a lithium niobate crystal, a polarized coherent light beam 10 may in certain embodiments be limited to a wavelength ranging from about 420 nm to about 5200 nm, whereas other crystals may have different operable wavelength ranges.

The sinusoidal electrical modulation applied to each pair of electrodes 42, 44 may modify a polarized coherent light beam 10 according to a Jones matrix

$$T_{crystal} = \begin{bmatrix} i \cdot cos(\omega t) & i \cdot sin(\omega t) \\ i \cdot sin(\omega t) & -i \cdot cos(\omega t) \end{bmatrix}, \qquad (4)$$

where i is the imaginary unit and therefore the outgoing polarized coherent light beam 11, which has passed the electrically controlled phase shifter 12 and which was initially linearly polarized, may be described after passing the electrically controlled phase shifter 12 by the expression

$$V_m = T_{crystal} \cdot V_i = \frac{i}{2}\left(\begin{bmatrix} 1 \\ i \end{bmatrix} e^{-i(\omega_0+\omega)t} + \begin{bmatrix} 1 \\ -i \end{bmatrix} e^{-i(\omega_0-\omega)t}\right). \qquad (5)$$

In other words, the outgoing polarized coherent light beam 11 may be considered to be comprised of a left circular component with a frequency of $\omega_0+\omega$ and a right circular polarized component with a frequency of $\omega_0-\omega$ after said

modulation.

The outgoing polarized coherent light beam 11 may have its collimation angle changed by a beam expander 14 and irradiates a surface of a target 26. Two neighboring different points 28, 29 spaced apart by a real space distance at the surface of the target 26 are taken into account to describe the following process. Referring to Fig. 1, the two neighboring points 28, 29 are marked as $P_1(x,y)$ corresponding to a first point 28 and $P_2(x+\delta x,y)$ corresponding to a second point 29, where $\delta x$ is the real space shearing distance between the two points 28, 29 of the surface of the target 26, wherein the shearing distance may be determined by the properties of a birefringent prism 18, a lens assembly 22, a camera 24 and/or their respective positions (described below).

The diffusion lights, termed reflected beams 30, from the selected two points 28, 29 will carry the information about the surface of the target 26, denoted as

$$V_{m1} = \frac{i}{2}\left(\begin{bmatrix}1\\i\end{bmatrix}e^{-i(\omega_0+\omega)t+\theta(x,y)} + \begin{bmatrix}1\\-i\end{bmatrix}e^{-i(\omega_0-\omega)t+\theta(x,y)}\right)$$
$$V_{m2} = \frac{i}{2}\left(\begin{bmatrix}1\\i\end{bmatrix}e^{-i(\omega_0+\omega)t+\theta(x+\delta x,y)} + \begin{bmatrix}1\\-i\end{bmatrix}e^{-i(\omega_0-\omega)t+\theta(x+\delta x,y)}\right)' \qquad (6)$$

where $\theta$ is the phase distribution of the surface of the target 26 at each point 28, 29 and $V_{m1}$ corresponds to a reflected beam 30 originating from the first point 28 of the surface of the target 26 and $V_{m2}$ corresponds to a reflected beam 30 originating from the second point 29 of the surface of the target 26.

Referring now to Fig. 3, the reflected beams 30 of the different points 28, 29 pass through a polarization dependent optical retarder 16 which is implemented as a quarter wave plate. The quarter wave plate converts a linear polarization component of the reflected beam 30 to a circular polarization component and vice versa. The principal axes 56 of the quarter wave plate may hereby be oriented at an angle 58 of 45° with respect to the initially defined polarization directions. The principal axes of a birefringent medium such as the polarization dependent optical retarder may in the following be defined as the axes along which transmitted light suffers no birefringence if the polarization of the transmitted light is aligned with said axes. The effect of the quarter wave plate on the reflected beams 30 may be described by the Jones matrix

$$T_{QWP} = \frac{1}{\sqrt{2}}\begin{bmatrix}1 & -i\\-i & 1\end{bmatrix}. \qquad (7)$$

The reflected beams 30 may be described by the expression

$$V_{n1} = T_{QWP} \cdot V_{m1} = \frac{1}{\sqrt{2}}\left(i\begin{bmatrix}1\\0\end{bmatrix}e^{-i(\omega_0+\omega)t+\theta(x,y)} + \begin{bmatrix}0\\1\end{bmatrix}e^{-i(\omega_0-\omega)t+\theta(x,y)}\right)$$
$$V_{n2} = T_{QWP} \cdot V_{m2} = \frac{1}{\sqrt{2}}\left(i\begin{bmatrix}1\\0\end{bmatrix}e^{-i(\omega_0+\omega)t+\theta(x+\delta x,y)} + \begin{bmatrix}0\\1\end{bmatrix}e^{-i(\omega_0-\omega)t+\theta(x+\delta x,y)}\right)' \qquad (8)$$

after passing the quarter wave plate. In other words, the previously left- and right-circularly polarized components of the reflected beams 30 that carry information about the phase distribution of the surface of the target 26 may have been converted to two linearly polarized components of the reflected beams 30 respectively carrying information about the phase distribution of the surface of the target 26, wherein the polarization axes of the two linearly polarized components of the reflected beams 30 are perpendicular to each other and wherein the frequencies of the two differently polarized components of the reflected beams 30 differ by $2\omega$.

Referring to Fig. 1 and Fig. 3, the reflected beams 30 pass through a birefringent prism 18 which is implemented as a Wollaston prism. Inside the Wollaston prism, the propagation directions of an ordinary light 32 and an extraordinary light 31 of each reflected beam 30 are modified such that an ordinary light 32 of a reflected beam 30 originating from a point 28, 29 of the surface of the target 26 has a different propagation direction than an extraordinary light 31 of the same reflected beam 30. The ordinary light 32 and the extraordinary light 31 hereby refer to polarization components aligned with the ordinary and/or extraordinary axes (or principal axes) of the Wollaston prism. The ordinary and extraordinary axes (or principal axes) of the Wollaston prism have an angle 58 of 45° with respect to the principal axes 56 of the quarter wave plate.

After the Wollaston prism, the ordinary light 32 and the extraordinary light 31 of each reflected beam 30 will separate from each other, which leads to a result that the ordinary light 32 of a reflected beam 30 originating from the first point 28 termed $V_{n1}$ and the extraordinary light 31 of a reflected beam 30 originating from the second point 29 termed

$V_{n2}$ may overlap at the image plane 34. The Wollaston prism may therefore be considered to act as the shearing device.

Referring to Fig. 3, a polarizer 20 is placed in front of the image plane 34 (with its polarization axis 60 having an angle 62 of 45° to the polarization axes or principal axes of the Wollaston prism) to make the two orthogonal polarized components (i.e. the ordinary light 32 of $V_{n1}$ and the extraordinary light 31 of $V_{n2}$) interfere to each other. The function of the polarizer 20 is described as

$$T_p = \frac{1}{2}\begin{bmatrix} 1 & 1 \\ 1 & 1 \end{bmatrix}. \tag{9}$$

Here we only consider the ordinary light 32 of $V_{n1}$ and the extraordinary light 31 of $V_{n2}$ that overlap at the image plane 34 and have passed the Wollaston prism

$$V_{n1o} = \frac{i}{\sqrt{2}}\begin{bmatrix} 1 \\ 0 \end{bmatrix} e^{-i(\omega_0 + \omega)t + \theta(x,y)}$$
$$V_{n2e} = \frac{1}{\sqrt{2}}\begin{bmatrix} 0 \\ 1 \end{bmatrix} e^{-i(\omega_0 - \omega)t + \theta(x+\delta x,y)}. \tag{10}$$

Then after $V_{n1o}$ and $V_{n2e}$ pass through the polarizer 20, the lights 31, 32 are described as

$$V'_{n1o} = T_p \cdot V_{n1o} = i\sqrt{2}\begin{bmatrix} 1 \\ 1 \end{bmatrix} e^{-i(\omega_0 + \omega)t + \theta(x,y)}$$
$$V'_{n2e} = T_p \cdot V_{n2e} = \sqrt{2}\begin{bmatrix} 1 \\ 1 \end{bmatrix} e^{-i(\omega_0 - \omega)t + \theta(x+\delta x,y)}. \tag{11}$$

Referring to Fig. 1 and Fig. 3, at the image plane 34, $V'_{n1o}$ and $V'_{n2e}$ interfere to one another in the focus point 36 and the shearogram or light intensity is

$$I = \begin{pmatrix} V'_{n1o} \\ V'_{n2e} \end{pmatrix}^* \begin{pmatrix} V'_{n1o} \\ V'_{n2e} \end{pmatrix} = I_0 + I_v cos(2\omega t + \varphi), \tag{12}$$

where * denotes the conjugate operation, $I_0$ is a background intensity, $I_v$ is the intensity of the interference pattern, $2\omega t$ is the phase shift that originates from the modulation of the polarized coherent light beam 10, and $\varphi=|\theta(x,y)-\theta(x+\delta x,y)|$ is the phase difference induced in the reflected beam 30 by the phase distribution of the target 26 after reflection. After then, by adjusting the focus length of the lens assembly 22 (preferably a zoom lens), the size of the phase shifted images (or phase shifted shearogram) may be enlarged or shrinked to fit the size of the imaging area of the camera 24, which may be implemented as a CCD camera. Similarly, using the lens assembly 22, the field of view may be adjusted.

In some embodiments, the method for obtaining a phase shifted shearogram of a target 26 may be a step in a method to obtain a phase map of a target. In other words, a plurality of phase shifted shearograms may be used to obtain a phase map of the target 26.

From the equation above, it can be seen that the speed of the phase shifting is twice the angular velocity of the crystal driving electric field. By capturing the shearograms in time sequence, which may be at equally spaced points in time, conventional temporal phase shifting algorithms may be used to retrieve the phase related to the target 26. Similarly, specific phase configurations (corresponding to a phase difference between polarization components of the outgoing polarized coherent light beam 11) such as 30° (or $\pi/6$), 60° (or $2\pi/6$) or any suitable phase configuration may be imaged by properly configuring the camera or the modulation source, allowing other suitable algorithms to retrieve the phase distribution related to the target 26.

Specifically, a phase map of the phase distribution related to the target 26 may be extracted by obtaining at least three separate images of the interference pattern, wherein the phases corresponding to the at least three images may differ by phases that are not multiples of $2\pi$. A simple means for obtaining the images may be obtaining images at different points in time, which may be equally spaced in time. The rotating phase may then take the values of

$$2\omega t \rightarrow \delta_i(t) = -\alpha, 0, \alpha; \ i = 1,2,3; \tag{13}$$

wherein $\delta_i(t)$ is the instantaneous phase corresponding to a point in time $t$ and $\alpha$ is the resulting absolute value of the phase shift between successive images indicated by the index $i$. The three shearograms may then be described by

$$I_1(x,y) = I_0 + I_v cos(-\alpha + \varphi(x,y)); \qquad (14)$$

$$I_2(x,y) = I_0 + I_v cos(\varphi(x,y)); \qquad (15)$$

$$I_3(x,y) = I_0 + I_v cos(\alpha + \varphi(x,y)); \qquad (16)$$

wherein the spatial dependence of the phase difference $\varphi$ and the intensities $I_1$, $I_2$ and $I_3$ is explicitly stated. Using the trigonometric addition identities, the phase map may then be calculated according to

$$\varphi(x,y) = \tan^{-1}\left\{\left[\frac{1-\cos\alpha}{\sin\alpha}\right]\frac{I_1(x,y)-I_3(x,y)}{2I_2(x,y)-I_1(x,y)-I_3(x,y)}\right\}. \qquad (17)$$

In some embodiments, any phase shifting algorithm and any relation between the phases or the times of taking an image may be chosen. Moreover, any number of images may be used to extract the phase map and additional techniques may be implemented, such as a technique to increase a signal to noise ratio at the detector or of the phase map.

The angular velocity (or frequency) of the rotating electric field applied to the electrically controlled phase shifter 12 may be easily turned up and down to meet different speed requirements. The phase shifting speed is only limited by the speed of the electrically controlled phase shifter 12, which may be instantaneous. Similarly, the speed may also be arbitrarily slow or the manipulation may be a series of static configurations. Preferably, the speed of phase shifting is related to the image acquisition rate of the camera 24. Particularly, the speed of phase shifting may be synchronized with the image acquisition rate of the camera 24. Specifically, the present system may be used to obtain shearography images at a real-time speed adapted to a camera. Such a system or method may therefore be used in real-time process control applications in a production site.

Thereby, the invention may generate a shearogram of the target in a common path configuration. The shearography technique and/or common path configuration may be resistant to vibrations and the phase shifting of at least one polarization component of the polarized coherent light beam irradiating the target is achieved electrically and with almost arbitrary manipulation speed or manipulation frequency. Additionally, a randomization of polarization components of the reflected beam may be suppressed by the inclusion of the polarization dependent optical retarder implemented as a quarter wave plate.

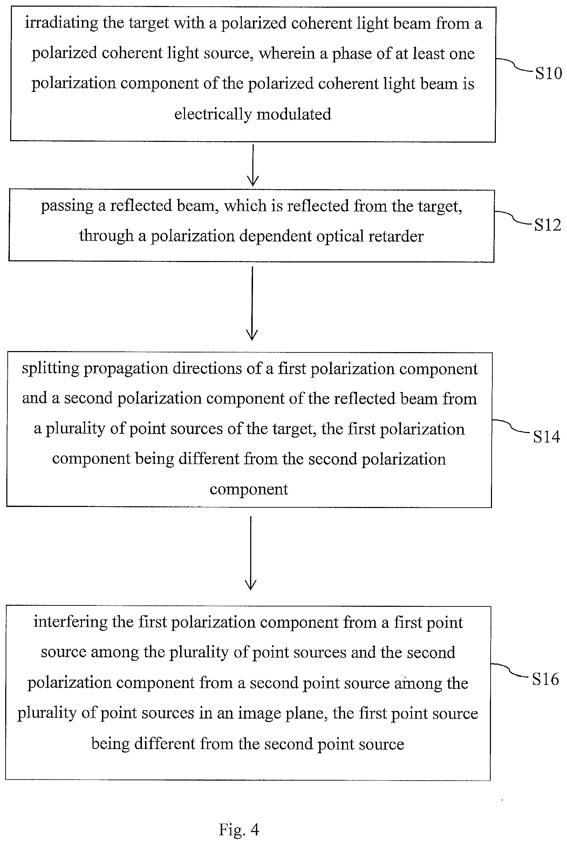

Fig. 4 illustrates a flow diagram for a method for obtaining a phase shifted shearogram of a target for shearography with 4 steps. In a step S10, the method comprises irradiating the target 26 with a polarized coherent light beam 10 from a polarized coherent light source, wherein a phase of at least one polarization component of the polarized coherent light beam 10 is electrically modulated. In a second step S12, the method comprises passing a reflected beam 30, which is reflected from the target 26, through a polarization dependent optical retarder 16. In a third step S 14, the method comprises splitting propagation directions of a first polarization component and a second polarization component of the reflected beam 30 from a plurality of point sources 28, 29 of the target 26, the first polarization component being different from the second polarization component. In a fourth step S16, the method comprises interfering the first polarization component 32 from a first point source 28 among the plurality of point sources 28, 29 and the second polarization component 31 from a second point source 29 among the plurality of point sources 28, 29 in an image plane 34, the first point source 28 being different from the second point source 29.

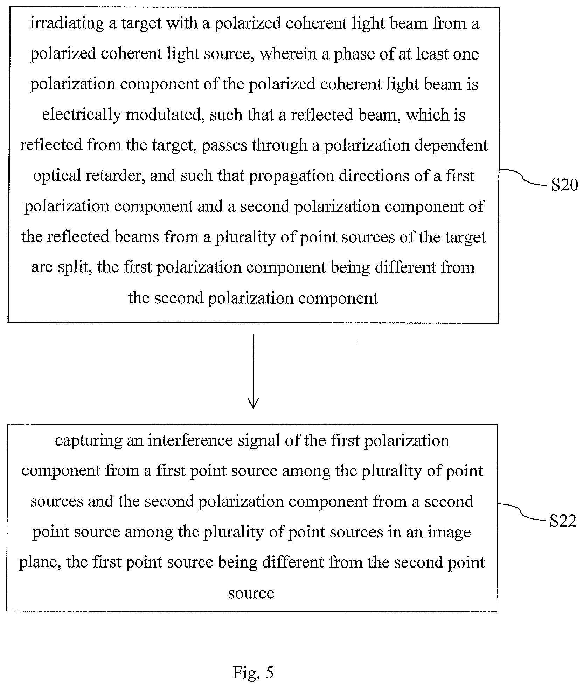

Fig. 5 illustrates a flow diagram for a computer program or computer program product comprising computer readable instructions for implementing a method. In a first step S20, the method comprises irradiating a target 26 with a polarized coherent light beam 10 from a polarized coherent light source, wherein a phase of at least one polarization component of the polarized coherent light beam 10 is electrically modulated, such that a reflected beam 30, which is reflected from the target 26, passes through a polarization dependent optical retarder 16, and such that propagation directions of a first polarization component and a second polarization component of the reflected beam 30 from a plurality of point sources 28, 29 of the target 26 are split, the first polarization component being different from the second polarization component. In a second step S22, the method comprises capturing an interference signal of the first polarization component from a first point source 28 among the plurality of point sources 28, 29 and the second polarization component from a second point source 29 among the plurality of point sources 28, 29 in an image plane 34, the first point source 28 being different from the second point source 29.

The description of the preferred embodiments and the Figures merely serve to illustrate the invention and the beneficial effects associated therewith, but should not be understood to imply any limitation. The scope of the invention is to be determined solely by the appended claims.

**List of reference signs**

| | |
|---|---|
| 8 | irradiation device |
| 10 | polarized coherent light beam |
| 11 | outgoing polarized coherent light beam |
| 12 | electrically controlled phase shifter |
| 14 | beam expander |
| 16 | polarization dependent optical retarder |
| 18 | birefringent prism |
| 20 | polarizer |
| 22 | lens assembly |
| 24 | camera |
| 26 | target |
| 28, 29 | point sources on the surface of the target |
| 30 | reflected beam |
| 31 | extraordinary light |
| 32 | ordinary light |
| 34 | image plane |
| 36 | focus point |
| 38, 40 | peripheral points |
| 42,44 | electrodes |
| 46, 48 | power supplies |
| 50 | length of the crystal |
| 52 | width of the crystal |
| 54 | height of the crystal |
| 56 | principal axis of the polarization dependent optical retarder |
| 58 | angle between the principal axis of the polarization dependent optical retarder and principal axes of the birefringent prism |
| 60 | principal axis of the polarizer |
| 62 | angle between principal axis of the polarizer and the principal axes of the birefringent prism |

**Claims**

1.  A method for obtaining a phase shifted shearogram of a target (26) for shearography comprising the steps of:

    irradiating the target (26) with a polarized coherent light beam (10) from a polarized coherent light source, wherein a phase of at least one polarization component of the polarized coherent light beam (10) is electrically modulated;
    passing a reflected beam (30), which is reflected from the target (26), through a polarization dependent optical retarder (16);
    splitting propagation directions of a first polarization component and a second polarization component of the reflected beam (30) from a plurality of point sources (28,29) of the target (26), the first polarization component being different from the second polarization component; and
    interfering the first polarization component (32) from a first point source (28) among the plurality of point sources (28,29) and the second polarization component (31) from a second point source (29) among the plurality of point sources (28,29) in an image plane (34), the first point source (28) being different from the second point source (29).

2.  The method of claim 1, further comprising:

    modulating electrically the phase of the at least one polarization component of the polarized coherent light beam (10).

3. The method of any of the claims 1 or 2, further comprising:

    modulating electrically the phase of the at least one polarization component of the polarized coherent light beam (10) in a birefringent medium in particular by varying an applied electrical field and/or an applied magnetic field and/or an applied mechanical strain.

4. The method of any of the preceding claims, wherein the polarized coherent light beam (10) irradiating the target (26) comprises two differently polarized components with different frequencies.

5. The method of any of the preceding claims, wherein two phases of two different polarization components of the polarized coherent light beam (10) are electrically modulated.

6. The method of any of the preceding claims, wherein the polarization dependent optical retarder (16) comprises a quarter wave plate.

7. The method of any of the preceding claims, furthermore comprising the step of:

    projecting the image plane (34) onto a camera (24); and preferably further comprising the step of:

        synchronizing an image acquisition rate of the camera (24) with a phase modulation of the polarized coherent light source.

8. The method of any of the preceding claims, wherein the splitting of the propagation directions of the first polarization component and the second polarization component is by means of a birefringent prism (18).

9. A system for obtaining a phase shifted shearogram of a target (26) for shearography comprising:

    an irradiation device (8) adapted to irradiate the target (26) with a polarized coherent light beam (10) from a polarized coherent light source, wherein a phase of at least one polarization component of the polarized coherent light beam (10) is electrically modulated;
    a polarization dependent optical retarder (16) in the path of a reflected beam (30) which is reflected from the target (26);
    a splitting device adapted to split propagation directions of a first polarization component and a second polarization component of the reflected beam (30) from a plurality of point sources (28,29) of the target (26), the first polarization component being different from the second polarization component; and
    a polarizer (20) adapted to allow interference between the first polarization component from a first point source (28) among the plurality of point sources (28,29) and the second polarization component from a second point source (29) among the plurality of point sources (28,29) in an image plane (34), the first point source (28) being different from the second point source (29).

10. The system of claim 9, wherein the irradiation device (8) comprises:

    an electrically controlled phase shifter (12) adapted to modulate the phase of the at least one polarization component of the polarized coherent light beam (10).

11. The system of claim 10, wherein the electrically controlled phase shifter (12) comprises a birefringent medium, whose birefringence preferably depends on an applied electrical field, and/or an applied magnetic field, and/or an applied mechanical strain.

12. The system of any of the claims 10 or 11, wherein the coherent light beam outgoing from the electrically controlled phase shifter (12) comprises two differently polarized components with different frequencies.

13. The system of any of the claims 9 to 12, which also comprises:

    a camera (24) configured to acquire a resulting phase shifted shearogram from the image plane (34); and preferably further comprising:

a synchronizing device configured to synchronize the phase of the at least one polarization component of the polarized coherent beam, with an acquisition rate of the camera (24).

14. A computer program comprising computer readable instructions for implementing a method with the steps of:

irradiating a target (26) with a polarized coherent light beam (10) from a polarized coherent light source, wherein a phase of at least one polarization component of the polarized coherent light beam (10) is electrically modulated, such that a reflected beam (30), which is reflected from the target (26), passes through a polarization dependent optical retarder (16), and such that propagation directions of a first polarization component and a second polarization component of the reflected beam (30) from a plurality of point sources (28,29) of the target (26) are split, the first polarization component being different from the second polarization component;
capturing an interference signal of the first polarization component from a first point source (28) among the plurality of point sources (28,29) and the second polarization component from a second point source (29) among the plurality of point sources (28,29) in an image plane (34), the first point source (28) being different from the second point source (29).

15. The computer program of claim 14 comprising computer readable instructions for implementing a method according to any of the claims 2 to 8 or controlling a system according to any of the claims 9 to 13.

EP 3 382 331 A1

Fig. 1

17

Fig. 2

Fig. 3

irradiating the target with a polarized coherent light beam from a polarized coherent light source, wherein a phase of at least one polarization component of the polarized coherent light beam is electrically modulated

—S10

passing a reflected beam, which is reflected from the target, through a polarization dependent optical retarder

—S12

splitting propagation directions of a first polarization component and a second polarization component of the reflected beam from a plurality of point sources of the target, the first polarization component being different from the second polarization component

—S14

interfering the first polarization component from a first point source among the plurality of point sources and the second polarization component from a second point source among the plurality of point sources in an image plane, the first point source being different from the second point source

—S16

Fig. 4

irradiating a target with a polarized coherent light beam from a polarized coherent light source, wherein a phase of at least one polarization component of the polarized coherent light beam is electrically modulated, such that a reflected beam, which is reflected from the target, passes through a polarization dependent optical retarder, and such that propagation directions of a first polarization component and a second polarization component of the reflected beams from a plurality of point sources of the target are split, the first polarization component being different from the second polarization component

S20

capturing an interference signal of the first polarization component from a first point source among the plurality of point sources and the second polarization component from a second point source among the plurality of point sources in an image plane, the first point source being different from the second point source

S22

Fig. 5

Europäisches
Patentamt

European
Patent Office

Office européen
des brevets

# EUROPEAN SEARCH REPORT

Application Number

EP 17 16 3877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VALERA J D ET AL: "PHASE STEPPING IN FIBER-BASED SPECKLE SHEARING INTERFEROMETRY", OPTICS LETTERS, OPTICAL SOCIETY OF AMERICA, vol. 19, no. 15, 1 August 1994 (1994-08-01), pages 1161-1163, XP000454994, ISSN: 0146-9592 * the whole document * | 1-15 | INV. G01B9/02 G01B11/16 G01L1/24 |
| Y | MURUKESHAN V M ET AL: "Polarization phase shifting shearography for optical metrological applications", OPTICS AND LASER TECHNOLOGY, ELSEVIER SCIENCE PUBLISHERS BV., AMSTERDAM, NL, vol. 30, no. 8, 1 November 1998 (1998-11-01), pages 527-531, XP004168914, ISSN: 0030-3992, DOI: 10.1016/S0030-3992(99)00005-5 * the whole document * | 1-15 | |
| Y | PETER A A M SOMERS ET AL: "Handling unfavourable polarization states in a polarization-based shearing speckle interferometer", JOURNAL OF OPTICS. A, PURE AND APPLIED OPTICS, INSTITUTE OF PHYSICS PUBLISHING, BRISTOL, GB, vol. 9, no. 6, 1 June 2007 (2007-06-01), pages S92-S97, XP020123349, ISSN: 1464-4258, DOI: 10.1088/1464-4258/9/6/S14 * the whole document * | 1-15 | TECHNICAL FIELDS SEARCHED (IPC) G01B G01L |

The present search report has been drawn up for all claims

| Place of search | Date of completion of the search | Examiner |
|---|---|---|
| Munich | 22 August 2017 | Gomez, Adriana |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. D. R. VALERA ; J. D. C. JONES.** Vibration analysis by modulated time-average speckle shearing interferometry. *Meas. Sci. Technol.,* 1995, vol. 6, 965-970

- **WANG et al.** Continual mechanical vibration trajectory tracking based on the electro-optical heterodyne interferometry. *Opt. Express,* 2014, vol. 22, 7799-7810